# EUROPÄISCHE PATENTANMELDUNG

(11) **EP 0 881 251 A1**
(43) Veröffentlichungstag der Anmeldung: **02.12.1998**
(21) Anmeldenummer: 97108634.3
(22) Anmeldetag: 28.05.1997
(51) Int. Cl.: C08K 3/00, C08L 67/06, C08L 63/02, C04B 26/10, C04B 41/48, C09D 5/28

(54) **Effektkitt für Natur- und Kunststeine**

(71) Anmelder: CT-Chemie GmbH, 90613 Grosshabersdorf (DE)
(72) Erfinder: Raff, Francescon, 90547 Stein (DE)
(74) Vertreter: Bunse, Günter, Dr.

(57) **Zusammenfassung**

Gegenstand der Erfindung ist ein Effektkitt für Natur- und Kunststeine auf Basis von kalthärtenden 2-Komponenten-Polyesterharzen oder auf Basis von kalthärtenden 2-Komponenten-Epoxidharzen als Bindemittel und mit Füllstoffen und Pigmenten.
Der erfindungsgemäße Effektkitt weist einen Gehalt an 60 bis 70 Gew.-% Bindemittel, 5 bis 15 Gew.-% anorganische Füllstoffe, 0.5 bis 5 Gew.-% Pigmente, 12.5 bis 20 Gew.-% Effektstoffe und ggf. 10 bis 12.5 Gew.-% Strukturstoffe auf.
Die Effektstoffe bestehen entweder aus einem Gemisch von natürlichen Glimmermineralien oder aus einem künstlichen Glimmermineral.
Mit der neuen Kittmasse ist ein charakteristischer optischer Effekt verbunden.

## Beschreibung

Gegenstand der vorliegenden Erfindung ist ein Effektkitt für Natur- und Kunststeine auf Basis von kalthärtenden 2-Komponenten-Polyesterharzen oder kalthärtenden 2-Komponenten-Epoxidharzen.
Unter kalthartenden 2-Komponenten-Polyesterharzen sind hier zu verstehen ungesättigte Polyesterharze (U.P.-Harze) aus mehrbasigen, ungesättigten Carbonsäuren, wie Maleinsäure, Fumarsäure, Itakonsäure oder deren Anhydride, und gesättigten, zweiwertigen Alkoholen, wie Äthylenglykol, Diglykol oder 1,3 Butylenglykol, (Komponente 1), die mit einem Monomeren, wie Styrol oder alpha-Methylstyrol, (Komponente 2), vernetzt sind.

Unter kalthärtenden 2-Komponenten-Epoxid-Harzen sind hier zu verstehen Polykondensationsprodukte aus Epichlorhydrin und Polyolen, wie Bisphenol A,(Komponente 1), die mit polyfunktionellen Verbindungen, die mit der Epoxidgruppe reagieren, wie Polyaminen, Dicarbonsäuren oder Anhydriden, (Komponente 2), vernetzt sind.

Bindemittel auf Basis von Polyester- und Epoxidharzen mit einem Zusatz an Füllstoffen und Pigmenten sind an sich bekannt und finden als Kittmasse Verwendung, u.a. als Fugenmaterial für Platten auf Basis von Natur- oder Kunststeinen oder als Ausbesserungsmaterial bzw. Ausfüllungsmaterial für schadhafte Stellen an derartigen Steinen.
Die Kittmasse enthält einen verhältnismäßig großen Anteil (bis zu 30 Gew.-% und mehr) an Füllstoffen.
Da geeignete Füllstoffe in der Natur als Mineralien in großen Mengen zur Verfügung stehen, ist man bestrebt, für diese Stoffe weitere Verwendungsmöglichkeiten zu erschließen, insbesondere solche, bei denen die Füllstoffe zur Herstellung neuer Produkte verwendet und auf diese Weise veredelt werden.
Im Zuge dieser Bemühungen ist es beispielsweise gelungen, eine Kittmasse auf Basis von Polyester- und Epoxidharzen zu entwickeln, die nicht nur farblich, sondern auch strukturell den Natur- und Kunststeinen angepaßt ist.
Ein weiteres Anwendungsgebiet für Füllstoffe läßt sich erschließen, wenn es gelingt, eine Kittmasse zur Verfügung zu stellen, die sich dazu eignet, Natur- und Kunststeine mit einem beliebigen Dekor (wie Ornamente, Figuren, Verzierungen oder Schriften) zu versehen.
Steine mit einem Dekor zu versehen, ist mit Schwierigkeiten bzw. mit einem verhältnismäßig großen (Arbeits-)Aufwand verbunden insbesondere dann, wenn man auf Steine nicht nur zweidimensionale (flächige) Dekore, sondern auch dreidimensionale (räumliche) Dekore auf- bzw. anbringen will.
Man geht dabei im allgemeinen so vor, daß man das vorgefertigte Dekor mit Hilfe eines Epoxidklebers in die Nutung einklebt, nachdem man vorher die Form des Dekors in die Steinoberfläche eingenutet hat. Die ganze Prozedur ist ziemlich umständlich, weil dabei Nutung und Dekor aufeinander abgestimmt bzw. genau einander angepaßt werden müssen.
Man kann allerdings auch so vorgehen, daß man die in Stein eingenutete Dekorform mit einer Kittmasse auf Polyesterharz- oder Epoxidharz-Basis, der Füllstoffe und Pigmente beigemengt sind, ausgießt.
Dreidimensionale (räumliche) Dekore lassen sich auf diese Weise allerdings nicht so ohne weiteres erhalten. Man muß dazu erst noch durch entsprechende Nachbehandlung bzw. Nachbearbeitung die räumliche Dekorstruktur schaffen. Das ist ein äußerst schwieriges Unterfangen, da die ausgehärtete Kittmasse sich wegen ihrer Härte nur schwer bearbeiten läßt. Dreidimensionale Feindekorstrukturen lassen sich daher auf diese Weise praktisch nicht herstellen.
Dieses Problem konnte aber schließlich dadurch gelöst werden, indem man dem Bindemittel neben Füllstoffen und Pigmenten bestimmte Mengen an natürlichen oder künstlichen, nachfolgend auch als Effektstoffe bezeichnete Glimmermineralien zugegeben hat, ggf. zusammen mit bestimmten,
von Meerestieren herrührenden, nachfolgend auch als Strukturstoffe bezeichneten Kalksorten, wie Perlmutt, Muschel- oder Korallenkalk. Überraschenderweise hat sich dabei herausgestellt, daß - wenn man bestimmte Mengenverhältnisse von Bindemittel zu Füllstoffen, Pigmenten und Effektstoffen und ggf. Strukturstoffen einhält - man nach der Aushärtung einen Kittmasse erhält, die sich dadurch auszeichnet, daß sie sich erheblich leichter bearbeiten, d.h. insbesondere fräsen und schleifen läßt.
Der Zusatz von Glimmermineralien und ggf. von bestimmten, von Meerestieren herrührenden Kalksorten verleiht der ausgehärteten Kittmasse offensichtlich Eigenschaften, u.a. Weichheit, die die Möglichkeit schaffen, die in die Einnutungen der Steine eingegoßene und ausgehärtete Kittmasse so zu bearbeiten, daß sich praktisch beliebige dreidimensionale Dekorfeinstrukturen, wie Figuren, erhalten lassen.
Die erfindungsgemäße Kittmasse eignet sich damit in geradezu idealer Weise als Material für künstlerische Gestaltungen auf Steine, wie Denk- oder Grabmäler.
Es kommt hinzu, daß mit der neuen Kittmasse im ausgehärteten Zustand ein charakteristischer, optischer Effekt verbunden ist, der offensichtlich darauf beruht, daß das auf die Oberfläche auftreffende Licht verschiedenartig reflektiert wird.
Man kann diesen Effekt noch erhöhen, indem man der Kittmasse geeignete Stoffe, wie Metalle oder Metalllegierungen in Pulverform beimengt, die dann dem ausgehärteten Kitt das Aussehen einer Edelmetallverklebung geben.

Gegenstand der Erfindung ist somit ein Effektkitt für Natur- und Kunststeine auf Basis von kalthärtenden 2-Komponenten-Polyesterharzen oder auf Basis von kalthärtenden 2-Komponenten-Epoxidharzen als Bindemittel und mit Füllstoffen und Pigmenten.
Der Effektkitt ist dadurch gekennzeichnet, daß er einen Gehalt an
(a) 60 bis 70 Gew.-% Bindemittel
(b) 5 bis 15 Gew.-% anorganische Füllstoffe
(c) 0.5 bis 5 Gew.-% Pigmente
(d) 12.5 bis 20 Gew.-% Effektstoffe und ggf.
(e) 10 bis 12.5 Gew.-% Strukturstoffe
aufweist.
Der Effektkitt besteht zu 60 bis 70 Gew.- % aus Bindemittel.
Das Bindemittel ist vorzugsweise das Polykondensationsprodukt aus Maleinsäure oder deren Anhydrid und Diglykol, das mit Styrol vernetzt ist, oder auch das Polykondensationprodukt aus Fumarsäure oder deren Anhydrid und Äthylenglykol, das mit alpha-Methylstyrol vernetzt ist.
Das Bindemittel ist aber vorzugsweise auch das Polykondensationsprodukt aus Epichlorhydrin und Bisphenol A, das mit Aminen vernetzt ist.

Der erfindungsgemäße Effektkitt enthält 5 bis 15 Gew.-% anorganische Füllstoffe. Als Füllstoffe kommen Calcit, Quarzsand, Kalkspat, Schwerspat und Talkum oder Gemische davon in Frage. Bevorzugt ist ein Gemisch von Calcid und Talkum.
Die Füllstoffe weisen eine Korngröße bis zu 60 my auf. Korngrößen bis zu 30 my sind bevorzugt.
Der erfindungsgemäße Effektkitt enthält ferner 0.5 bis 5 Gew.-% Pigmente. Die Pigmente bestehen aus einem Gemisch von anorganischen Pigmenten und einem Zusatz von Phthalocyaninfarbstoffen.
Für das Gemisch kommen sowohl natürliche anorganische als auch künstliche anorganische Pigmente in Frage.
Natürliche anorganische Pigmente sind beispielsweise Kreide, Ocker, Umbra, Grünerde, Eisenoxid oder Graphit.
Künstliche anorganische Pigmente sind beispielsweise Titandioxid, Chromgelb, Menninge, Ultramarin oder Ruß.
Bevorzugt ist ein Gemisch aus Titandioxid, Eisenoxid und Ruß.
Es versteht sich von selbst, daß sich die Zusammensetzung der Pigmente nach Art und Menge nach der gewünschten Farbgebung richtet.
Die Pigmente weisen eine Korngröße von 10 bis 50 my auf.
Der erfindungsgemäße Effektkitt enthält ferner 12.5 bis 20 Gew.-% Effektstoffe.
Die Effektstoffe können entweder aus einem Gemisch von natürlichen Glimmermineralien bestehen oder aus einem künstlichem Glimmermineral.
Ein Beispiel für ein Gemisch natürlicher Glimmermineralien ist ein Gemisch aus hellen Glimmermineralien, bestehend aus Muskovit, Paragonit und Lepidolith.
Ein weiteres Beispiel für ein Gemisch natürlicher Glimmermineralien ist ein Gemisch aus dunklen Glimmermineralien, bestehend aus Biotit, Phlogopit und Zinnwaldit.
Ein Beispiel für ein künstliches Glimmermineral ist das Produkt aus 31 bis 33 Gew.-% Siliciumdioxid (SiO₂), 31 bis 33 Gew.-% Magnesiumoxid (MgO), 11 bis 12 Gew.-% Aluminiumoxid (Al₂O₃) und 22 bis 26 Gew.-% Kaliumfluorsilikat (K₂SiF₆).
Ein weiteres Beispiel für ein künstliches Glimmermineral ist das Produkt aus 31 bis 33 Gew.-% Kaliumfluorsilicat (K₂SiF₆), 31 bis 33 Gew.-% Kalifeldspat (KAlSi₃O₈), 12 bis 14 Gew.-% Aluminium- und Magnesiumoxid (Al₂O₃ bzw. MgO) und 26 bis 28 Gew.-% Quarzsand (SiO₂).
Die Glimmersynthese erfolgt im elektrische Ofen bei 1400 C°.
Die Effektstoffe weisen eine Korngröße von 10 bis 50 my auf. Bevorzugt ist eine Korngröße von 15 bis 35 my.
Der erfindungsgemäße Effektkitt kann ggf. zusätzlich auch noch 10 bis 12.5 Gew.-% Strukturstoffe enthalten. Die Strukturstoffe sind dann ein Gemisch von verschiedenen, von Meerestieren herrührenden Kalksorten, und zwar von Perlmutt und Muschelkalk oder von Perlmutt, Muschel- und Korallenkalk. Die Korngröße der Strukturstoffe beträgt 50 my bis 3 mm vorzugsweise 50 my bis 1.5 mm.

Die folgenden Beispiele erläutern die Erfindung:

### Beispiel 1

Zu 42 g eines ungesättigten Polyesterharzes (Polykondensationsprodukt auf Basis von Maleinsäureanhydrid und Diglykol) werden 30 g Füllstoffe (Korngröße bis 25 my), und zwar 12 g Calcit, 12 g Talkum und 6 g Ouarzsand,3 g Pigmente (Korngröße bis 10 my), und zwar 1 g Titandioxid, 1 g Eisenoxid, 0.5 g Ruß und einem Zusatz von 0.5 g Phthalocyanin-Kupfer, und 30 g Effektstoffe (Korngröße bis 30 my), und zwar 10 g Muskovit, 10 g Paragonit und 10 g Lepidolith, gegeben und in 78 g Styrol gelöst.
Die Aushärtung des Effektkittes erfolgt bei Raumtemperatur mit einem Zusatz von 0.4 g Dibenzoylperoxid und ist im wesentlichen nach 70 Minuten beendet.

### Beispiel 2

Zu 44 g eines Polykondensationsproduktes auf Basis von Epichlorhydrin und Bisphenol A werden 30 g Füllstoffe (Korngröße bis 30 my), und zwar 10 g Calcit, 10 g Talkum und 10 g Quarzsand, 3 g Pigmente (Korngröße bis 15 my), und zwar 1 g Titandioxid, 1 g Eisenoxid, 0.5 g Ruß und einem Zusatz von 0.5 g Phthalocyanin-Kupfer 30 g Effektstoffe (Korngröße bis 25 my), und zwar 10 g Biotit, 10 g Phlogopit und 10 g Zinnwaldit, und 20 g Strukturstoffe, und zwar 10 g Perlmutt und 10 g Muschelkalk, gegeben und in 76 g Triäthylamin gelöst.
Die Aushärtung des Effektkittes erfolgt bei Raumtemperatur mit einem Zusatz von 0.8 g Lithiumbromid und ist im wesentlichen nach 70 Minuten beendet.

## Patentansprüche

1. Effektkitt für Natur- und Kunststeine auf Basis von kalthärtenden 2-Komponenten-Polyesterharzen oder auf Basis von kalthärtenden 2-Komponenten-Epxoxidharzen als Bindemittel und mit Füllstoffen und Pigmenten, gekennzeichnet durch einen Gehalt an
(a) 60 bis 70 Gew.% Bindemittel
(b) 5 bis 15 Gew.% anorganischen Füllstoffen
(c) 0,5 bis 5 Gew.% Pigmenten und
(d) 12,5 bis 20 Gew.% Effektstoffen und ggf.
(e) 10 bis 12,5 Gew.-% Strukturstoffen.

2. Effektkitt gemäß Anspruch 1, dad. gek., daß das Bindemittel ein ungesättigtes Polykondensationsprodukt aus einer mehrbasigen, ungesättigten Carbonsäure oder deren Anhydrid und einem gesättigten, zweiwertigen Alkohol ist, das mit einem Monomeren vernetzt ist.

3. Effektkitt gemäß Anspruch 2, dad. gek., daß das Polykondensationsprodukt ein Produkt aus Maleinsäure oder deren Anhydrid und Diglykol ist, das mit Styrol vernetzt ist.

4. Effektkitt gemäß Anspruch 2, dad. gek., daß das Polykondensationsprodukt ein Produkt aus Fumarsäure oder deren Anhydrid und Äthylenglykol ist, das mit alpha-Methylstyrol vernetzt ist.

5. Effektkitt gemäß Anspruch 1, dad. gek., daß das Bindemittel ein Polykondensationsprodukt aus Epichlorhydrin und Polyolen ist, das mit polyfunktionellen Verbindungen, die mit der Epoxidgruppe reagieren, vernetzt ist.

6. Effektkitt gemäß Anspruch 5, dad. gek., daß das Polyol Bisphenol A ist.

7. Effektkitt gemäß Anspruch 5 und 6, dad. gek., daß die mit der Epoxidgruppe reagierende Verbindung Triäthylamin ist.

8. Effektkitt gemäß Ansprüche 1 bis 7, dad. gek., daß die Füllstoffe ein Gemisch von Calcit und Talkum sind.

9. Effektkitt gemäß Anspruch 8, dad. gek., daß die Füllstoffe eine Korngröße bis zu 60 my aufweisen.

10. Effektkitt gemäß Anspruch 9, dad. gek., daß die Korngröße bis zu 30 my beträgt.

11. Effektkitt gemäß Ansprüche 1 bis 10, dad gek., daß die Pigmente aus einem Gemisch von anorganischen Pigmenten und einem Zusatz von Phthalocyaninfarbstoffen bestehen.

12. Effektkitt gemäß Anspruch 11, dad. gek., daß das Gemisch aus Titandioxid, Eisenoxid und Ruß besteht.

13. Effektkitt gemäß Anspruch 11 und 12, dad. gek., daß die Pigmente eine Korngröße von 10 bis 50 my aufweisen.

14. Effektkitt gemäß Ansprüche 1 bis 13, dad. gek., daß die Effektstoffe aus einem Gemisch von natürlichen Glimmermineralien bestehen.

15. Effektkitt gemäß Anspruch 14, dad. gek., daß das Gemisch aus hellen Glimmermineralien besteht.

16. Effektkitt gemäß Anspruch 15, dad. gek., daß das Gemisch aus Muskovit, Paragonit, und Lepidolith besteht.

17. Effektkitt gemäß Anspruch 14, dad. gek., daß das Gemisch aus dunklen Glimmermineralien besteht.

18. Effektkitt gemäß Anspruch 17, dad. gek., daß das Gemisch aus Biotit, Phlogopit und Zinnwaldit besteht.

19. Effektkitt gemäß Ansprüche 1 bis 13, dad. gek., daß die Effektstoffe aus einem künstlichen Glimmermineral bestehen.

20. Effekkitt gemäß Anspruch 19, dad. gek., daß das Glimmermineral ein Produkt aus 31 bis 33 Gew.-% Siliciumdioxid (SiO₂), 31 bis 33 Gew.-% Magnesiumoxid (MgO), 11 bis 12 Gew.-% Aluminiumoxid (Al₂O₃) und 22 bis 26 Gew.-% Kaliumfluorsilicat (K₂SiF₆) ist.

21. Effektkitt gemäß Anspruch 19, dad. gek., daß das Glimmermineral ein Produkt aus 31 bis 33 Gew.-% Kaliumfluorsilikat (K₂SiF₆), 31 bis 33 Gew.-% Kalifeldspat (KAlSi₃O₈), 12 bis 14 Gew.-% Aluminium- und Magnesiumoxid (Al₂O₃ bzw. MgO) und 26 bis 28 Gew.-% Quarzsand (SiO₂) ist.

22. Effektkitt gemäß Ansprüche 14 bis 21, dad. gek., daß die Effektstoffe eine Korngröße von 10 bis 50 my aufweisen.

23. Effektkitt gemäß Anspruch 22, dad. gek., daß die Korngröße 15 bis 35 my beträgt.

24. Effektkitt gemäß Ansprüche 1 bis 23, dad. gek., daß die Strukturstoffe ein Gemisch von Perlmutt, Muschel- und Korallenkalk sind oder ein Gemisch von Perlmutt und Muschelkalk.

25. Effektkitt gemäß Anspruch 24, dad. gek., daß die Strukturstoffe eine Korngröße von 50 my bis 3 mm aufweisen.

26. Effektkitt gemäß Anspruch 25, dad. gek., daß die Korngroße 50 my bis 1,5 mm beträgt.
